# EUROPÄISCHE PATENTSCHRIFT

(11) **EP 1 994 677 B1**
(45) Veröffentlichungstag und Bekanntmachung des Hinweises auf die Patenterteilung: **04.08.2010**
(21) Anmeldenummer: 06722578.9
(22) Anmeldetag: 03.03.2006
(51) Int. Cl.: H04L 12/18

(54) **VERFAHREN ZUR ÜBERTRAGUNG DER IDENTITÄT EINER MULTICAST-NACHRICHT, VERFAHREN UND VORRICHTUNG ZUR ÜBERTRAGUNG EINER MULTICAST-NACHRICHT SOWIE VORRICHTUNG ZUM EMPFANGEN EINER MULTICAST-NACHRICHT**
METHOD FOR TRANSMITTING THE IDENTITY OF A MULTICAST MESSAGE, METHOD AND DEVICE FOR TRANSMITTING A MULTICAST MESSAGE AND DEVICE FOR RECEIVING A MULTICAST MESSAGE
PROCÉDÉ DE TRANSMISSION DE L'IDENTIFIANT D'UN MESSAGE À DIFFUSION SÉLECTIVE, PROCÉDÉ ET DISPOSITIF DE TRANSMISSION D'UN MESSAGE À DIFFUSION SÉLECTIVE ET DISPOSITIF DE RÉCEPTION D'UN MESSAGE À DIFFUSION SÉLECTIVE

(43) Veröffentlichungstag der Anmeldung: 26.11.2008
(73) Patentinhaber: Nokia Siemens Networks GmbH & Co. KG, 81541 München (DE)
(72) Erfinder: KAPPLER, Cornelia, 10587 Berlin (DE); PAN, Jianming, A-1220 Wien (AT); ZHOU, Di, A-1220 Wien (AT)
(86) Internationale Anmeldenummer: PCT/DE2006/000421
(87) Internationale Veröffentlichungsnummer: WO 2007/098722

(56) Entgegenhaltungen:
- EP-A- 1 307 027
- AL-SHAER E ET AL: "TOWARD INTEGRATING IP MULTICASTING IN INTERNET NETWORK MANAGEMENT PROTOCOLS" COMPUTER COMMUNICATIONS, ELSEVIER SCIENCE PUBLISHERS BV, AMSTERDAM, NL, Bd. 24, Nr. 5/6, 15. März 2001 (2001-03-15), Seiten 473-485, XP001150258 ISSN: 0140-3664
- "3GPP TS 22.146 V7.1.0, 3rd Generation Partnership Project; Technical Specification Group Services and System Aspects; Multimedia Broadcast/Multicast Service; Stage 1 (Release 7)" ETSI STANDARDS, März 2006 (2006-03), Seiten 1-18, XP002385907 SOPHIA-ANTIPOLIS, FRANCE in der Anmeldung erwähnt

## Beschreibung

Die Erfindung betrifft ein Verfahren zur Übertragung der Identität einer Multicast-Nachricht.

Derzeit werden mehr und mehr unterschiedliche Arten sowohl mobiler als auch drahtgebundener Kommunikationsnetzwerke mit vollkommen unterschiedlichen Eigenschaften und Größen entworfen, entwickelt und verwendet. Dabei besteht unter anderem die Notwendigkeit, eine effiziente und automatisierte Zusammenarbeit zwischen diesen Kommunikationsnetzwerken zu ermöglichen. Zu diesem Zweck ist es erforderlich, dass ein Kommunikationsnetzwerk seine Eigenschaften, beispielsweise hinsichtlich seiner Identität oder der von ihm unterstützten oder benötigten Dienste oder Ressourcen, weiteren Kommunikationsnetzwerken in seiner Umgebung mitteilt oder diese weiteren Kommunikationsnetzwerke dazu auffordert, ihre entsprechenden Eigenschaften mitzuteilen.

Generell stellt sich somit die Frage, wie in Zukunft elektronische Nachrichten, insbesondere in Form so genannter Multicast-Nachrichten, bei Bedarf auf möglichst effiziente Art und Weise an Endgeräte beziehungsweise Netzknoten von Kommunikationsnetzwerken übertragen werden können.

Multicast, teilweise auch unter dem Begriff "Gruppenruf" bekannt, bezeichnet die Übertragung einer elektronischen Nachricht bzw. inhaltlich identischer Kopien der elektronischen Nachricht von einem Sender an eine Gruppe von mehreren Empfängern. Dabei erfolgt die Übertragung der elektronischen Nachricht vorteilhafterweise derart, dass der Sender nicht für jeden der Empfänger der elektronischen Nachricht eine separate Kopie der elektronischen Nachricht sendet. Dies bedeutet, dass auf Seiten des Senders bei der Verwendung eines Multicast-Verfahrens in der Regel lediglich eine Bandbreite benötigt wird, die mit derjenigen beim Senden der elektronischen Nachricht an einen einzelnen Empfänger identisch ist, d. h. die erforderliche Bandbreite skaliert nicht mit der Anzahl der Empfänger.

Existierende Verfahren zur Übertragung einer Multicast-Nachricht, wie beispielsweise das aus dem Dokument "3GPP TS 22.146 V7.0.0 (2005-12); 3rd Generation Partnership Project; Technical Specification Group Services and System Aspects; Multimedia Broadcast/Multicast Service; Stage 1 (Release 7)" bekannte Verfahren, beruhen in der Regel darauf, dass eine Identität einer Multicast-Nachricht, welche auch als Multicast-Adresse bezeichnet wird, definiert und einer Gruppe von Empfängern zugewiesen wird. Dabei ist es notwendig, dass sowohl der Sender der Multicast-Nachricht als auch die Empfänger der Multicast-Nachricht die Information über die Identität der Multicast-Nachricht besitzen. Aus diesem Grund ist eine entsprechende Registrierung der Empfänger erforderlich, bevor eine Übertragung einer Multicast-Nachricht erfolgen kann.

Entsprechende Verfahren eignen sich somit im Wesentlichen nur für statische Anwendungen, wie beispielsweise Fernseh- oder Radioübertragungen, welche in ihrer Art mittel- oder langfristige Zugehörigkeiten von Empfängern zu einer Multicast-Gruppe voraussetzen. Bei solchen Anwendungen ist es für den Sender der Multicast-Nachricht üblicherweise nicht notwendig, Informationen über Eigenschaften der Empfänger zu besitzen. Weiterhin ist es aus Sicht des Senders auch nicht erforderlich sicher zu stellen, dass alle potenziellen Empfänger einer Multicast-Nachricht über die entsprechende Identität der Multicast-Nachricht informiert werden und somit die Multicast-Nachricht tatsächlich empfangen können.

Aus den genannten Gründen sind die zuvor beschriebenen, auf einer Identität beruhenden Verfahren zur Übertragung einer Multicast-Nachricht dahingehend in ihrer Anwendbarkeit beschränkt, dass sie für eine Unterstützung von kurzfristigen und dynamischen Anwendungen ungeeignet sind. So kann Multicast beispielsweise zum Zwecke der Signalisierung, d. h. zur Übertragung von Signalisierungs- bzw. Steuerungsnachrichten zwischen Komponenten eines Kommunikationsnetzwerkes oder auch den Komponenten mehrerer Kommunikationsnetzwerke, nicht eingesetzt werden, da Anwendungen im Bereich der Signalisierung üblicherweise bedarfsabhängig und dynamisch sind und somit eine unmittelbare Nachrichtenübertragung erforderlich machen. In solchen Fällen ist es daher in der Regel nicht möglich, rechtzeitig eine einer zu übertragenden Multicast-Nachricht zugewiesene Identität an alle potenziellen Empfänger der Multicast-Nachricht zu verteilen.

Darüber hinaus kann auch der Fall auftreten, dass der Sender der Multicast-Nachricht an Informationen über die potenziellen Empfänger der Multicast-Nachricht interessiert ist. Hierbei kann es sich beispielsweise um Informationen zu bestimmten Eigenschaften wie etwa der räumlichen Verteilung oder dem genauen Aufenthaltsort der Empfänger handeln. Weiterhin ist es denkbar, dass der Sender der Multicast-Nachricht bereits vor dem Senden sicherstellen möchte, dass alle potenziellen Empfänger der Multicast-Nachricht über die Identität verfügen und somit die zu sendende Multicast-Nachricht empfangen können.

In dem Artikel "Toward Integrating IP Multicasting in Internet Network Management Protocols" von Al-Shaer et al. veröffentlicht in Computer Communications, Elsevier Science Publishers BV, Amsterdam, NL, Bd. 24, Nr. 5/6, 15. März 2001, Seiten 473-485, XP001150258 ISSN: 0140-3664, ist eine Mehrpunkt Gruppenkommunikation unter Verwendung von IP Multicasting beschrieben. Insbesondere sind hieraus eine verwaltungseinrichtung und eine Paketdatenerzeugungseinrichtung bekannt.

In der EP-A1-1 307 027 ist ein Verfahren zur Einrichtung einer Kommunikation zwischen einem Endgerät und einem Host beschrieben.

Der vorliegenden Erfindung liegt die Aufgabe zugrunde, ein einfaches und leistungsfähiges Verfahren zur Übertragung der Identität einer Multicast-Nachricht anzugeben.

Diese Aufgabe wird erfindungsgemäß gelöst durch ein Verfahren zur Übertragung einer Identität einer Multicast-Nachricht von einem Sender an mehrere über ein gemeinsames Übertragungsmedium mit dem Sender verbundene Empfänger mit den folgenden Schritten: Zuweisen der Identität zu der Multicast-Nachricht, Erzeugen einer Broadcast-Nachricht, welche die Identität sowie vorbestimmte Empfänger der Multicast-Nachricht kennzeichnende Adressen enthält, Senden der Broadcast-Nachricht von dem Sender an alle über das gemeinsame Übertragungsmedium mit dem Sender verbundene Empfänger, Überprüfen der Broadcast-Nachricht durch die Empfänger und Speichern der Identität durch die mittels der kennzeichnenden Adressen vorbestimmten Empfänger.

Das erfindungsgemäße Verfahren bietet den Vorteil, dass die Identität der Multicast-Nachricht mittels der Broadcast-Nachricht von dem Sender an alle über das gemeinsame Übertragungsmedium mit dem Sender verbundene Empfänger übermittelt wird. Dabei beinhaltet die Broadcast-Nachricht nicht nur die Identität der Multicast-Nachricht, sondern des Weiteren auch Adressen, welche vorbestimmte Empfänger der Multicast-Nachricht kennzeichnen. Hierdurch wird es allen über das gemeinsame Übertragungsmedium mit dem Sender verbundenen Empfängern ermöglicht, eine Auswertung der in der Broadcast-Nachricht enthaltenen Adressen vorzunehmen. Sofern die entsprechende Überprüfung bei einem Empfänger der Broadcast-Nachricht ergibt, dass eine diesem Empfänger zugeordnete Adresse in der Broadcast-Nachricht enthalten ist, so speichert dieser Empfänger die in der Broadcast-Nachricht enthaltene Identität. Somit wird es durch das erfindungsgemäße Verfahren vorteilhafterweise ermöglicht, dass die Identität der Multicast-Nachricht innerhalb kürzester Zeit von dem Sender an die über ein gemeinsames Übertragungsmedium mit dem Sender verbundenen Empfänger verteilt werden kann. Dabei ist es dem Sender möglich, Empfänger der Multicast-Nachricht vorzubestimmen. Hierdurch wird vorteilhafterweise die Voraussetzung für eine spätere Übertragung der mit der Identität gekennzeichneten Multicast-Nachricht an die vorbestimmten Empfänger geschaffen.

Die Erfindung betrifft darüber hinaus ein Verfahren zur Übertragung einer Multicast-Nachricht.

Bezüglich des Verfahrens zur Übertragung einer Multicast-Nachricht liegt der vorliegenden Erfindung die Aufgabe zugrunde, ein einfaches und leistungsfähiges Verfahren zur Übertragung einer Multicast-Nachricht anzugeben.

Diese Aufgabe wird erfindungsgemäß gelöst durch ein Verfahren zur Übertragung einer Multicast-Nachricht von einem Sender an mehrere über ein gemeinsames Übertragungsmedium mit dem Sender verbundene Empfänger mit den folgenden Schritten: Zuweisen einer Identität zu der Multicast-Nachricht, Erzeugen einer Broadcast-Nachricht, welche die Identität sowie vorbestimmte Empfänger der Multicast-Nachricht kennzeichnende Adressen enthält, Senden der Broadcast-Nachricht von dem Sender an alle über das gemeinsame Übertragungsmedium mit dem Sender verbundene Empfänger, Überprüfen der Broadcast-Nachricht durch die Empfänger, Speichern der Identität durch die mittels der kennzeichnenden Adressen vorbestimmten Empfänger, Senden der Multicast-Nachricht über das gemeinsame Übertragungsmedium durch den Sender, wobei die Multicast-Nachricht die Identität enthält, und Empfangen der Multicast-Nachricht durch die vorbestimmten Empfänger anhand der Identität.

Das erfindungsgemäße Verfahren zur Übertragung einer Multicast-Nachricht ist vorteilhaft, da es von Seiten des Senders eine kurzfristige Festlegung der Empfänger der Multicast-Nachricht erlaubt. Zu diesem Zwecke wird die der Multicast-Nachricht (bzw. dieser und möglicherweise folgenden Multicast-Nachrichten an dieselben Empfänger, d. h. einer Multicast-Gruppe) zugeordnete Identität mittels der Broadcast-Nachricht an alle über das gemeinsame Übertragungsmedium mit dem Sender verbundene Empfänger übermittelt.

Das gemeinsame Übertragungsmedium bietet dabei den Vorteil, dass alle Empfänger der Broadcast-Nachricht diese unmittelbar und nahezu zeitgleich empfangen. Damit besteht die Möglichkeit, dass die Empfänger anhand der in der Broadcast-Nachricht übertragenen, die vorbestimmten Empfänger kennzeichnenden Adressen überprüfen können, ob sie als Empfänger der Multicast-Nachricht vorgesehen sind. Sofern dies der Fall ist, speichert der betreffende Empfänger der Broadcast-Nachricht die Identität. Im folgenden empfangene Multicast-Nachrichten werden von den Empfängern anhand der in der jeweiligen Multicast-Nachricht enthaltenen Identität gefiltert, d. h. ein Empfänger bearbeitet lediglich solche Multicast-Nachrichten, die eine von ihm gespeicherte Identität beinhalten.

Eine vorteilhafte Ausgestaltungsform des erfindungsgemäßen Verfahrens zeichnet sich aus durch Senden mindestens einer weiteren die Identität enthaltenden Multicast-Nachricht über das gemeinsame Übertragungsmedium und Empfangen der mindestens einen weiteren Multicast-Nachricht durch die vorbestimmten Empfänger basierend auf der Identität. Diese Weiterbildung des erfindungsgemäßen Verfahrens ist bevorzugt, da eine erneute Übertragung der Identität mittels einer Broadcast-Nachricht im Falle des Sendens weiterer, die Identität enthaltender Multicast-Nachrichten nicht erforderlich ist. Nach einmaliger Verteilung der Identität mittels der Broadcast-Nachricht können Multicast-Nachrichten somit auf die übliche Art und Weise versendet werden. Dies bedeutet, dass die maximale Anzahl von Nachrichten, die zur Übertragung einer Multicast-Nachricht benötigt werden, zwei beträgt. Aufgrund der bestehenden Möglichkeit des Sendens weiterer Multicast-Nachrichten mit derselben Identität wird die durchschnittliche Anzahl benötigter Nachrichten jedoch in der Regel kleiner als zwei sein.

In einer bevorzugten Ausführungsform ist das erfindungsgemäße Verfahren derart ausgestaltet, dass als gemeinsames Übertragungsmedium ein Medium der Sicherungsschicht (Data Link Layer) verwendet wird. Die Verwendung eines Mediums der Sicherungsschicht als gemeinsames Übertragungsmedium ist bevorzugt, da bei den üblicherweise verwendeten, beispielsweise nach dem OSI (Open Systems Interconnection)-Modell implementierten Protokollstapeln die Sicherungsschicht (Schicht 2, auch als Data Link Layer oder Link Layer bezeichnet) in der Regel in Form eines gemeinsamen Übertragungsmediums realisiert ist.

In einer weiteren bevorzugten Ausführungsform des erfindungsgemäßen Verfahrens wird als gemeinsames Übertragungsmedium ein Funkübertragungskanal verwendet. Dies ist vorteilhaft, da somit das erfindungsgemäße Verfahren zur Übertragung einer Multicast-Nachricht auch im Falle von drahtlos über ein Mobilfunknetz mit dem Sender verbundenen Empfängern verwendet werden kann.

Vorzugsweise kann das erfindungsgemäße Verfahren auch derart ausgeprägt sein, dass als gemeinsames Übertragungsmedium ein Datenbus verwendet wird. Bei einem Datenbus handelt es sich im Falle von drahtgebunden miteinander verbundenen Sendern und Empfängern um ein gebräuchliches und leistungsfähiges gemeinsames Übertragungsmedium.

In einer bevorzugten Weiterbildung des erfindungsgemäßen Verfahrens wird als Multicast-Nachricht eine Signalisierungsnachricht verwendet. Dabei werden als Signalisierungsnachrichten erfindungsgemäß solche Nachrichten bezeichnet, mit denen Steuer- oder Kontrollinformationen zwischen verschiedenen Netzknoten oder Endgeräten eines Kommunikationsnetzwerkes oder mehrerer Kommunikationsnetzwerke übertragen werden. Die Verwendung einer Signalisierungsnachricht als Multicast-Nachricht ist bevorzugt, da es durch das erfindungsgemäße Verfahren vorteilhafterweise gerade auch für Signalisierungsnachrichten ermöglicht wird, eine Übertragung in Form einer Multicast-Nachricht vorzunehmen.

In einer weiteren vorteilhaften Ausgestaltungsform kann das erfindungsgemäße Verfahren auch so ablaufen, dass als kennzeichnende Adressen IP (Internetprotokoll)- oder MAC (Media Access Control)-Adressen verwendet werden. Bei IP- und MAC-Adressen handelt es sich um zur Adressierung von Empfängern gebräuchliche Adressen. Dabei sind MAC-Adressen der Sicherungsschicht (Schicht 2) und IP-Adressen der im Protokollstapel über der Sicherungsschicht angeordneten Netz- oder Vermittlungsschicht (Schicht 3) zugeordnet. Vorteilhafterweise können somit sowohl IP- als auch MAC-Adressen als kennzeichnende Adressen verwendet werden.

Vorzugsweise ist das erfindungsgemäße Verfahren derart ausgebildet, dass in der Broadcast-Nachricht gekennzeichnet wird, ob als kennzeichnende Adressen IP- oder MAC-Adressen enthalten sind. Dies ermöglicht es den Empfängern der Broadcast-Nachricht, auf einfache Art und Weise zu erkennen, dass es sich bei der Broadcast-Nachricht um eine solche handelt, die kennzeichnende Adressen und eine Identität enthält sowie welche Art von Adressen in der Broadcast-Nachricht enthalten ist. Hierdurch wird vorteilhafterweise die Überprüfung der kennzeichnenden Adressen durch die Empfänger vereinfacht.

In einer bevorzugten Weiterbildung des erfindungsgemäßen Verfahrens wird als Broadcast-Nachricht ein Datenpaket mit einem Header und einem Datencontainer (Body) verwendet. Diese Ausführungsform ist vorteilhaft, da es sich bei Datenpaketen im Zusammenhang mit einer paketvermittelten Datenübertragung um die üblicherweise verwendeten Nachrichten handelt. Dabei ist vorzugsweise ein einzelnes Datenpaket als Broadcast-Nachricht ausreichend, wodurch die zu übertragene Datenmenge klein gehalten wird. Alternativ hierzu ist jedoch auch die Verwendung mehrer, vorzugsweise als zusammengehörig gekennzeichneter Datenpakete als Broadcast-Nachricht möglich, beispielsweise für den Fall, dass eine große Anzahl kennzeichnender Adressen die Verwendung mehr als eines Datenpaketes zur Informationsübertragung erforderlich macht.

Vorzugsweise ist das erfindungsgemäße Verfahren derart ausgeprägt, dass die kennzeichnenden Adressen der vorbestimmten Empfänger in dem Datencontainer übertragen werden. Das Übertragen der kennzeichnenden Adressen der vorbestimmten Empfänger in dem Datencontainer ist vorteilhaft, da in dem Datencontainer üblicherweise ausreichend Kapazität zur Aufnahme der kennzeichnenden Adressen zur Verfügung steht.

Vorteilhafterweise kann das erfindungsgemäße Verfahren auch so ablaufen, dass in der Broadcast-Nachricht eine Gültigkeitsdauer der Identität angegeben wird. Dies bietet den Vorteil, dass somit eine Identität nach Ablauf der Gültigkeitsdauer von den jeweiligen Empfängern gelöscht werden kann. Hierdurch wird es vermieden, dass eine einmal von vorbestimmten Empfängern gespeicherte Identität von diesen eine unbegrenzte Zeit vorgehalten werden muss. Vorzugsweise kann darüber hinaus eine neue spezifische Nachricht zum Verlängern der Gültigkeitsdauer der Identität eingeführt werden.

Zur Übertragung der Broadcast- und der Multicast-Nachricht können beliebige existierende oder zukünftige Protokollstandards drahtloser oder drahtgebundener Technologien, insbesondere der Sicherungsschicht, verwendet werden, welche ein gemeinsames Übertragungsmedium verwenden. Beispielhaft seien GSM (Global System for Mobile Communications), WCDMA (Wideband Code Division Multiple Access), TD-SCDMA (Time Division Synchronous Code Division Multiple Access) und WiMAX (Worldwide Interoperability for Microwave Access) genannt. In einer besonders bevorzugten Weiterbildung des erfindungsgemäßen Verfahrens werden die Broadcast- und die Multicast-Nachricht unter Verwendung des Ethernet (IEEE802.3)-Standards oder des Wireless Local Area Network (WLAN, IEEE802.11)-Standards gesendet. Die Verwendung des Ethernet- oder des WLAN-Standards für die Übertragung der Broad- und der Multicast-Nachricht ist bevorzugt, da es sich bei diesen beiden Standards um weit verbreitete Protokollstandards der Sicherungsschicht in drahtgebundenen beziehungsweise drahtlosen Kommunikationsnetzen handelt.

In einer weiteren vorteilhaften Weiterbildung läuft das erfindungsgemäße Verfahren so ab, dass bei Verwendung einer Broadcast-Nachricht in Form eines Datenpaketes mit einem Header und einem Datencontainer und bei Übertragung der kennzeichnenden Adressen der vorbestimmten Empfänger in dem Datencontainer in dem Parameter "Type" angezeigt wird, ob es sich bei den kennzeichnenden Adressen um IP- oder MAC-Adressen der vorbestimmten Empfänger handelt. Dies ist vorteilhaft, da der im Ethernet- und WLAN-Standard bereits existierende Parameter "Type" dafür verwendet werden kann, die Art der im Datencontainer übertragenden kennzeichnenden Adressen anzugeben. Zu diesem Zwecke werden vorzugsweise zwei neue Protokolltypen zusammen mit entsprechenden Formaten des Datencontainers eingeführt. Bei der Übertragung von MAC-Adressen in dem Datencontainer können dabei die kennzeichnenden Adressen von etwa 250 Empfängern in einer aus einem Datenpaket bestehenden Broadcast-Nachricht übertragen werden. Sollte dies nicht ausreichend sein, so kann beispielsweise durch Hinzufügen eines oder mehrerer Kontrollbits eine Verknüpfung mit zusätzlichen Datenpaketen erfolgen.

Die Erfindung betrifft darüber hinaus eine Vorrichtung zum Senden einer Multicast-Nachricht.

Bezüglich der Vorrichtung liegt der vorliegenden Erfindung die Aufgabe zugrunde, eine einfache und leistungsfähige Vorrichtung zum Senden einer Multicast-Nachricht anzugeben.

Erfindungsgemäß wird diese Aufgabe gelöst durch eine Vorrichtung zum Senden einer Multicast-Nachricht an mehrere über ein gemeinsames Übertragungsmedium an die Vorrichtung angebundene Empfänger mit einer Verwaltungseinrichtung zum Zuweisen einer Identität zu der Multicast-Nachricht, einer Paketdatenerzeugungseinrichtung zum Erzeugen der Multicast-Nachricht, welche die Identität enthält, einer Broadcast-Paketerzeugungseinrichtung zum Erzeugen einer Broadcast-Nachricht, welche die Identität und mehrere, vorbestimmte Empfänger der Multicast-Nachricht kennzeichnende Adressen enthält, sowie einer Paketübertragungseinrichtung zum Übertragen der Broadcast-Nachricht an alle über das gemeinsame Übertragungsmedium angebundene Empfänger und zum dazu zeitlich versetzten Übertragen der Multicast-Nachricht an die mittels der kennzeichnenden Adressen vorbestimmten Empfänger.

Die erfindungsgemäße Vorrichtung zum Senden einer Multicast-Nachricht bietet den vorteil, dass sie das Erzeugen einer Broadcast-Nachricht, welche die Identität und mehrere vorbestimmte Empfänger der Multicast-Nachricht kennzeichnende Adressen enthält, ermöglicht. Dadurch, dass mittels der Paketübertragungseinrichtung eine Übertragung der Broadcast-Nachricht an alle über das gemeinsame Übertragungsmedium angebundenen Empfänger erfolgt, ist eine kurzfristige und schnelle Verteilung der Identität der Multicast-Nachricht an die durch den Sender vorgesehenen Empfänger möglich.

Generell ist zu beachten, dass es sich bei den Komponenten der erfindungsgemäßen Vorrichtung im Wesentlichen um logische Einheiten handelt. Dies bedeutet, dass diese logischen Einheiten maßgeblich durch ihre Funktion bestimmt sind. Somit können beispielsweise auch mehrere der Komponenten durch dieselbe Hardware- oder Software-Komponente realisiert werden. Umgekehrt ist aber auch eine Realisierung einer oder mehrerer der Komponenten in Form mehrerer Hardware- oder Software-Komponenten möglich.

Die Erfindung betrifft des Weiteren eine Vorrichtung zum Empfangen einer Multicast-Nachricht.

Bezüglich der Vorrichtung zum Empfangen einer Multicast-Nachricht liegt der vorliegenden Erfindung die Aufgabe zugrunde, eine einfache und leistungsfähige Vorrichtung zum Empfangen einer Multicast-Nachricht anzugeben.

Diese Aufgabe wird erfindungsgemäß gelöst durch eine Vorrichtung zum Empfangen einer Multicast-Nachricht, wobei die Multicast-Nachricht für mehrere über ein gemeinsames Übertragungsmedium an einen Sender angebundene Empfänger bestimmt ist, mit einer Empfangseinrichtung zum Empfangen einer Broadcast-Nachricht und der Multicast-Nachricht, einer Broadcast-Verarbeitungseinrichtung zum Analysieren, ob die empfangene Broadcast-Nachricht eine die Vorrichtung kennzeichnende Adresse enthält und gegebenenfalls zum Auslesen einer Identität aus der betreffenden Broadcast-Nachricht sowie einer Multicast-Verarbeitungseinrichtung zum Speichern der von der Broadcast-Verarbeitungseinrichtung übermittelten Identität und zum Filtern und Empfangen von die Identität enthaltenden Multicast-Nachrichten.

Die erfindungsgemäße Vorrichtung zum Empfangen einer Multicast-Nachricht ist bevorzugt, da sie mit der Broadcast-Verarbeitungseinrichtung eine Komponente zum Analysieren, ob die empfangene Broadcast-Nachricht eine die Vorrichtung kennzeichnende Adresse enthält, und gegebenenfalls zum Auslesen der Identität aus der betreffenden Broadcast-Nachricht aufweist. Dies ermöglicht es, mittels der Broadcast-Nachricht die Identität der Multicast-Nachricht an einen Empfänger in Form der erfindungsgemäßen Vorrichtung zu verteilen. Diese ist mittels der Multicast-Verarbeitungseinrichtung zum Speichern der von der Broadcast-Verarbeitungseinrichtung übermittelten Identität und zum Filtern und Empfang von die Identität enthaltenen Multicast-Nachrichten ausgebildet. Somit ist die erfindungsgemäße Vorrichtung vorteilhafterweise derart ausgebildet, dass sie kurzfristig den Empfang von Multicast-Nachrichten ermöglicht.

Die Erfindung betrifft darüber hinaus ein Datenpaket.

Bezüglich des Datenpaketes liegt der Erfindung die Aufgabe zugrunde, ein Datenpaket anzugeben, welches ein einfaches und leistungsfähiges Verfahren zur Übertragung einer Multicast-Nachricht unterstützt.

Diese Aufgabe wird erfindungsgemäß gelöst durch ein Datenpaket zur Übertragung einer Broadcast-Nachricht mit einem Header und einem Datencontainer (Body), wobei der Datencontainer des Datenpaketes eine Identität zur Kennzeichnung von Multicast-Nachrichten sowie vorbestimmte, der Identität zugeordnete Empfänger kennzeichnende Adressen aufweist.

Das erfindungsgemäße Datenpaket ist bevorzugt, da es die Übertragung einer Broadcast-Nachricht ermöglicht, wobei der Datencontainer des Datenpaketes nicht nur die Identität zur Kennzeichnung von Multicast-Nachrichten, sondern darüber hinaus auch vorbestimmte, der Identität zugeordnete Empfänger kennzeichnende Adressen aufweist. Somit ist das erfindungsgemäße Datenpaket vorteilhafterweise zur Verteilung der Identität an senderseitig vorbestimmte Empfänger ausgebildet.

Vorzugsweise ist das erfindungsgemäße Datenpaket derart ausgeführt, dass das Datenpaket als kennzeichnende Adressen IP (Internetprotokoll)- oder MAC (Media Access Control)-Adressen aufweist. Diese Ausführungsform des erfindungsgemäßen Datenpaketes ist vorteilhaft, da es sich bei IP beziehungsweise MAC-Adressen um häufig verwendete Adressen auf Ebene der Sicherungsschicht (Schicht 2) beziehungsweise der Netzschicht (Schicht 3) handelt.

In einer vorteilhaften Weiterbildung enthält das erfindungsgemäße Datenpaket eine Information, ob das Datenpaket als kennzeichnende Adressen IP (Internetprotokoll)- oder MAC (Media Access Control)-Adressen aufweist. Dies bietet den Vorteil dass der Empfänger des Datenpaketes auf einfache Art und Weise feststellen kann, ob das Datenpaket kennzeichnende Adressen aufweist, und gegebenenfalls um welche Art von kennzeichnenden Adressen es sich handelt.

In einer bevorzugten Ausführungsform ist das erfindungsgemäße Datenpaket nach Ethernet (IEEE802.3)- oder WLAN (IEEE802.11)-Vorgaben aufgebaut. Diese Ausführungsform des erfindungsgemäßen Datenpaketes ist bevorzugt, da es sich bei Ethernet und WLAN um weit verbreitete und leistungsfähige Protokollstandards der Sicherungsschicht handelt.

Vorteilhafterweise kann das erfindungsgemäße Datenpaket auch derart ausgeprägt sein, dass bei einem Datenpaket mit kennzeichnenden Adressen in Form von IP (Internetprotokoll)- oder MAC (Media Access Control)-Adressen der Parameter "Type" im Datencontainer des Datenpaketes angibt, ob das Datenpaket als kennzeichnende Adressen IP (Internetprotokoll)- oder MAC (Media Access Control)-Adressen aufweist. Dies bietet den Vorteil, dass ohne Hinzufügung eines neuen Parameters, d. h. lediglich mit einer geringfügigen Erweiterung des bestehenden Protokolls, im Datenpaket angegeben werden kann, ob das Datenpaket als kennzeichnende Adressen IP- oder May-Adressen aufweist.

Generell sei darauf hingewiesen, dass die vorliegende Erfindung vorteilhafterweise in Kombination mit einer weiteren, aus einer weiteren Patentanmeldung der Anmelderin (Anmeldetag: 02.03.2006, internes Aktenzeichen: 2006E02630AT, Veröffentlichungsnummer WO 2007/098721) bekannten Erfindung verwendet werden kann, welche insbesondere ein Verfahren und eine Vorrichtung zur Übertragung einer elektronischen Nachricht angibt.

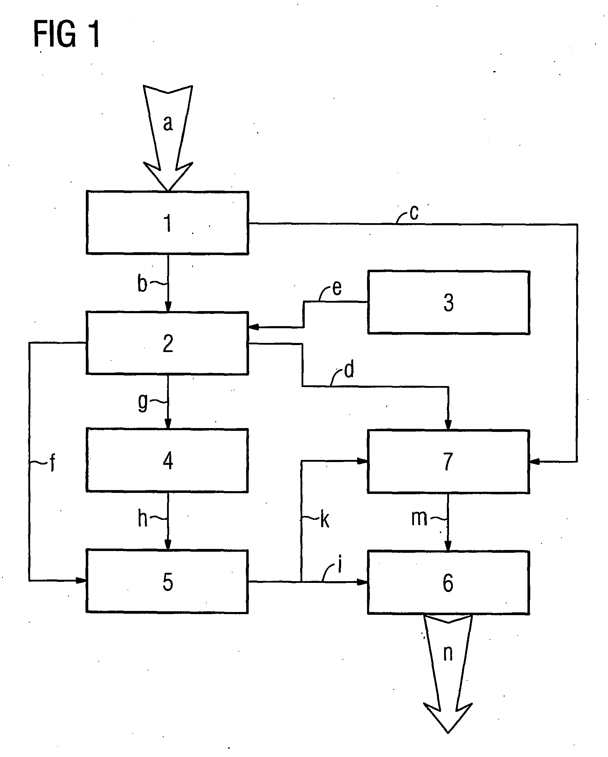

Zur weiteren Erläuterung der Erfindung zeigt
- Figur 1: in einer schematischen Skizze ein Flussdia- gramm zur Erläuterung eines Ausführungsbei- spiels der erfindungsgemäßen Vorrichtung zum Senden einer Multicast-Nachricht sowie eines Ausführungsbeispiels des erfindungsgemäßen Verfahrens hinsichtlich seiner senderseitigen Schritte zur Übertragung dieser Multicast- Nachricht,

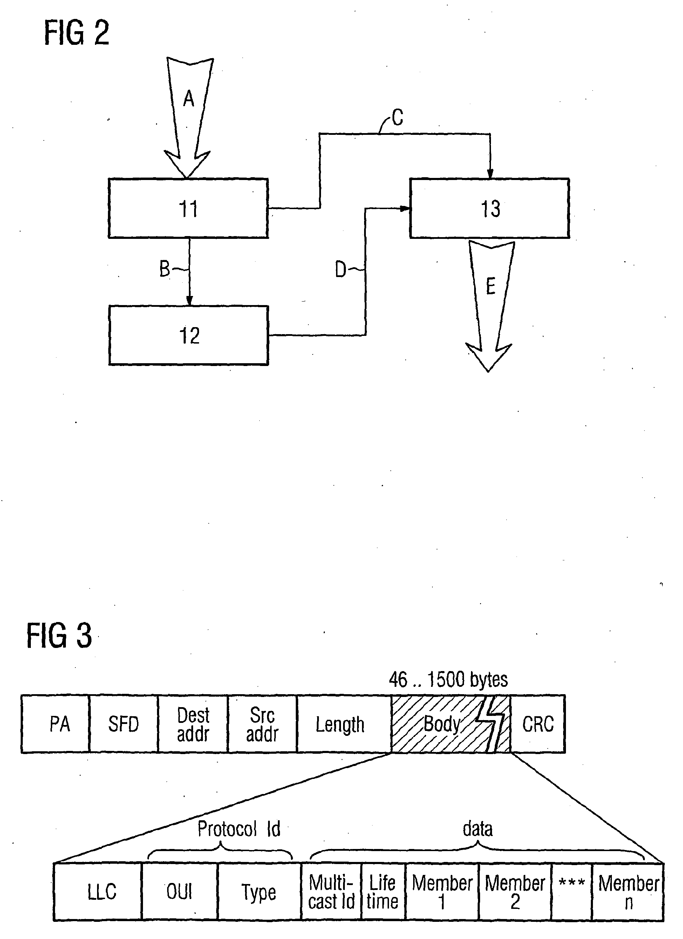

- Figur 2: in einer schematischen Skizze ein Flussdia- gramm zur Erläuterung eines Ausführungsbei- spiels der erfindungsgemäßen Vorrichtung zum Empfangen einer Multicast-Nachricht sowie ei- nes Ausführungsbeispiels des erfindungsgemäßen Verfahrens hinsichtlich seiner empfängerseiti- gen Schritte zur Übertragung der Multicast- Nachricht und
- Figur 3: in einer schematischen Skizze ein Ausführungs- beispiel des erfindungsgemäßen Datenpaketes.

Figur 1 zeigt in einer schematischen Skizze ein Flussdiagramm zur Erläuterung eines Ausführungsbeispiels der erfindungsgemäßen Vorrichtung zum Senden einer Multicast-Nachricht sowie eines Ausführungsbeispiels des erfindungsgemäßen Verfahrens hinsichtlich seiner senderseitigen Schritte zur Übertragung dieser Multicast-Nachricht. Dabei stellen die einzelnen Blöcke logische Komponenten der Vorrichtung dar und die Pfeile zwischen den Blöcken kennzeichnen den Nachrichten- bzw. Informationsfluss zwischen den Komponenten.

In dem in Figur 1 dargestellten Ausführungsbeispiel entscheidet sich eine für die Wegelenkung (Routing) ,auf Ebene der Netzschicht verantwortliche Steuereinrichtung eine Signalisierungsnachricht mittels einer Multicast-Nachricht auf der Sicherungsschicht (Data Link Layer) zu verteilen. Zu diesem Zweck leitet die Steuereinrichtung der Netzschicht die betreffenden Daten, d. h. den Inhalt der Multicast-Nachricht sowie die Empfänger der Multicast-Nachricht kennzeichnende Adressen der Netzschicht, an die dargestellte Vorrichtung in Form einer Steuereinrichtung auf Ebene der Sicherungsschicht weiter. Dabei können die beiden Steuereinrichtungen beispielsweise Bestandteil eines Routers sein.

Ein Vorprozessor 1 der Steuereinrichtung auf Ebene der Sicherungsschicht empfängt die Daten der Multicast-Nachricht, analysiert sie und sendet die Adressen der Netzschicht mittels Nachricht bzw. Verfahrenschritt b weiter an eine Adressüberprüfungseinrichtung 2. Den Inhalt der Multicast-Nachricht, welcher auch als "Link Layer Payload Data" bezeichnet wird, überträgt der Vorprozessor 1 in Verfahrensschritt c zur weiteren Verarbeitung an eine Paketdatenerzeugungseinrichtung 7.

Nach Empfang der Adressen der Netzschicht von dem Vorprozessor 1 überprüft die Adressüberprüfungseinrichtung 2, ob für die empfangenen Adressen der Netzschicht, d. h. für die Gruppe von Adressen der Netzschicht bzw. die durch sie definierte Multicast-Gruppe, eine gültige Identität zur Übertragung einer Multicast-Nachricht existiert. Sofern dies der Fall ist, wird diese Identität von der Adressüberprüfungseinrichtung 2 in Verfahrensschritt d an die Paketdatenerzeugungseinrichtung 7 übermittelt.

Anderenfalls wird in einem in Figur 1 aus Gründen der Übersichtlichkeit nicht dargestellten Verfahrensschritt eine Verwaltungseinrichtung 3 aktiviert. Diese weist der zu sendenden Multicast-Nachricht bzw. den Adressen der Netzschicht eine Identität zu. Dabei versieht die Verwaltungseinrichtung 3 die Identität mit einer Gültigkeitsdauer, welche als Bestandteil der Identität selbst betrachtet werden kann, und übermittelt die Identität in Verfahrenschritt e an die Adressüberprüfungseinrichtung 2.

Die Aufgabe der Verwaltungseinrichtung 3 besteht somit darin, eine Zuweisung neuer, zumindest lokal eindeutiger Identitäten zur Übertragung einer Multicast-Nachricht vorzunehmen und den entsprechenden Identitäten eine Gültigkeitsdauer zuzuweisen. Dabei kann die Berechnung der Gültigkeitsdauer auf verschiedenste Arten erfolgen. Neben der Möglichkeit, einmal erzeugte Identitäten wieder zu löschen bietet die Verwendung einer Gültigkeitsdauer den Vorteil, dass sichergestellt wird, dass jederzeit neue Identitäten zur Verfügung stehen. Dabei ist zu beachten, dass die Identitäten vorzugsweise auch dann ihre Gültigkeit verlieren, wenn sich die Konfiguration auf der Sicherungsschicht (d. h. der Local Link) ändert.

Die Adressüberprüfungseinrichtung 2 übermittelt die neue Identität (zusammen mit der Gültigkeitsdauer) in Verfahrensschritt f an eine Broadcast-Paketerzeugungseinrichtung 5. Darüber hinaus sendet sie in Verfahrensschritt g die Adressen der Netzschicht an eine Adressübersetzungseinrichtung 4.

Die Adressübersetzungseinrichtung 4 übersetzt die Adressen der Netzschicht in entsprechende Adressen der Sicherungsschicht, d. h. im vorliegenden Fall in MAC-Adressen, und sendet diese zur weiteren Verarbeitung in Verfahrensschritt h an die Broadcast-Paketerzeugungseinrichtung 5. Eine entsprechende Funktion der Adressübersetzung wird von den meisten gängigen Protokollen der Sicherungsschicht unterstützt. Die Adressübersetzung kann unterbleiben, falls die Broadcast-Paketerzeugungseinrichtung 5 nicht die MAC-Adressen, sondern die Adressen der Netzschicht, beispielsweise in Form von IP-Adressen, verwendet.

Die Broadcast-Paketerzeugungseinrichtung 5 erzeugt eine Broadcast-Nachricht in Form eines spezifischen Broadcast-Datenpaketes der Sicherungsschicht, welches sowohl die in Verfahrensschritt h von der Adressübersetzungseinrichtung 4 empfangenen Adressen der Sicherungsschicht als auch die in Verfahrensschritt f von der Adressüberprüfungseinrichtung 2 empfangene Identität der Multicast-Nachricht enthält. Wie zuvor bereits erläutert, ist es alternativ hierzu auch möglich, dass die Broadcast-Paketerzeugungseinrichtung 5 unmittelbar die IP-Adressen anstelle der MAC-Adressen in das Datenpaket einfügt.

Die erzeugte Broadcast-Nachricht wird in Verfahrensschritt i von der Broadcast-Paketerzeugungseinrichtung 5 an eine Paketübertragungseinrichtung 6 übermittelt.

Des Weiteren übermittelt die Broadcast-Paketerzeugungseinrichtung 5 in Verfahrensschritt k die Identität der Multicast-Nachricht an die Paketdatenerzeugungseinrichtung 7. Dabei wird vorteilhafterweise zusätzlich zu der Multicast-Nachricht eine eine zeitliche Verzögerung kennzeichnenden Zeitangabe (Timer) an die Paketdatenerzeugungseinrichtung 7 übermittelt. Die Zeitangabe gibt dabei die Zeit an, die zwischen dem Senden der Broadcast-Nachricht und dem Versenden der Multicast-Nachricht gewartet werden soll. Alternativ kann diese Zeitangabe auch bereits als Parameter in der Paketdatenerzeugungseinrichtung 7 oder in der Paketübertragungseinrichtung 6 gespeichert sein.

Die Paketdatenerzeugungseinrichtung 7 erzeugt nun eine Multicast-Nachricht.der Sicherungsschicht, welche die Identität sowie die in Verfahrensschritt c von dem Vorprozessor 1 empfangenen Daten der Multicast-Nachricht enthält. Daraufhin wartet die Paketdatenerzeugungseinrichtung 7 den Ablauf der durch die empfangenen Zeitangabe vorbestimmten Zeit ab, um sicherzustellen, dass alle über das gemeinsame Übertragungsmedium verbundenen Empfänger die Broadcast-Nachricht in Form des spezifischen Datenpaketes bereits empfangen und verarbeitet haben.

Anschließend leitet die Paketdatenerzeugungseinrichtung die erzeugte Multicast-Nachricht in Verfahrensschritt m an die Paketübertragungseinrichtung 6 weiter.

Sofern die Paketdatenerzeugungseinrichtung 7 in Verfahrensschritt d von der Adressüberprüfungseinrichtung 2 eine bereits existierende Identität der Multicast-Nachricht empfängt, erzeugt die Paketdatenerzeugungseinrichtung 7 die Multicast-Nachricht ohne zeitliche Verzögerung und leitet sie unmittelbar an die Paketübertragungseinrichtung 6 weiter. In diesem Fall ist die Identität der Multicast-Nachricht bereits zuvor, beispielsweise im Zusammenhang mit einer früheren Multicast-Nachricht, mittels einer Broadcast-Nachricht verteilt und von den vorbestimmten Empfängern verarbeitet worden, so dass eine erneute Übertragung der Broadcast-Nachricht nicht erforderlich ist.

Die Aufgabe der Paketübertragungseinrichtung 6 besteht darin, die in Verfahrensschritt i von der Broadcast-Paketerzeugungseinrichtung 5 empfangene Broadcast-Nachricht und die in Verfahrensschritt m von der Paketdatenerzeugungseinrichtung 7 empfangene Multicast-Nachricht auf das gemeinsame Übertragungsmedium zu legen, d. h. die betreffenden Nachrichten an alle an das Übertragungsmedium angeschlossenen Empfänger zu senden. Dies ist durch Verfahrensschritt n angedeutet und geschieht entsprechend der Reihenfolge des Empfangs der Nachrichten. Dabei ist die Broadcast-Nachricht dafür bestimmt, von allen mit dem gemeinsamen Übertragungsmedium verbundenen Empfängern empfangen und überprüft zu werden. Sofern ein Empfänger seine eigene MAC-Adresse oder seine eigene IP-Adresse in der empfangenen Broadcast-Nachricht vorfindet, so bereitet sich der Empfänger darauf vor, eine Multicast-Nachricht oder mehrere Multicast-Nachrichten mit der betreffenden Identität zu empfangen.

Figur 2 zeigt in einer schematischen Skizze ein Flussdiagramm zur Erläuterung eines Ausführungsbeispiels der erfindungsgemäßen Vorrichtung zum Empfangen einer Multicast-Nachricht sowie eines Ausführungsbeispiels des erfindungsgemäßen Verfahrens hinsichtlich seiner empfängerseitigen Schritte zur Übertragung der Multicast-Nachricht.

In dem in Figur 2 dargestellten Ausführungsbeispiel ist eine Empfangseinrichtung 11 zum Empfang von Broadcast- und Multicast-Nachrichten über ein gemeinsames Übertragungsmedium der Sicherungsschicht ausgebildet. Dies ist durch Verfahrensschritt A angedeutet und kann beispielsweise mittels entsprechender Datenpakete erfolgen.

Die Empfangseinrichtung 11 leitet empfangene Broadcast-Nachrichten in Verfahrensschritt B an eine Broadcast-Verarbeitungeinrichtung 12 und empfangene Multicast-Nachrichten in Verfahrensschritt C an eine Multicast-Verarbeitungseinrichtung 13 weiter.

Die Broadcast-Verarbeitungeinrichtung 12 identifiziert die empfangene Broadcast-Nachricht anhand eines vorbestimmten Kennzeichens als eine Broadcast-Nachricht der Art, mittels derer eine Identität einer Multicast-Nachricht verteilt wird. Wenn die Adresse der Sicherungsschicht beispielsweise in Form der MAC-Adresse bzw. die Adresse der Netzschicht beispielsweise in Form der IP-Adresse, die der Vorrichtung zugeordnet sind, in den Nutzdaten (so genannte Payload Data) der Broadcast-Nachricht enthalten sind, so leitet die Broadcast-Verarbeitungeinrichtung 12 in Verfahrenschritt D die aus der Broadcast-Nachricht ausgelesene Identität zusammen mit einer zugehörigen Gültigkeitsdauer an die Multicast-Verarbeitungseinrichtung 13 weiter.

Nach Empfang der Identität und der Gültigkeitsdauer von der Broadcast-Verarbeitungeinrichtung 12 speichert die Multicast-Verarbeitungseinrichtung 13 die Identität und die zugehörige Gültigkeitsdauer bis zu dem Zeitpunkt lokal ab, bis entweder die Gültigkeitsdauer abgelaufen ist oder sich die Konfiguration auf Ebene der Sicherungsschicht, d. h. die Konfiguration der über das gemeinsame Übertragungsmedium verbundenen Empfänger, ändert.

Nach Empfang der Multicast-Nachricht in Verfahrensschritt C von der Empfangseinrichtung 11 überprüft die Multicast-Verarbeitungseinrichtung 13, ob es sich bei der empfangenen Identität um eine solche handelt, welche sie lokal abgespeichert hat. Sofern dies der Fall ist, leitet die Multicast-Verarbeitungseinrichtung 13 in Schritt E die Nutzdaten (Payload Data) der Multicast-Nachricht an eine Steuereinrichtung der im Protokollstapel übergeordneten lokalen Netzschicht weiter. Dies hat zur Folge, dass die betreffende Multicast-Nachricht von der Vorrichtung bzw. dem der Vorrichtung zugeordneten Empfänger analysiert und ausgewertet werden kann.

Figur 3 zeigt in einer schematischen Skizze ein Ausführungsbeispiel des erfindungsgemäßen Datenpaketes zur Übertragung einer Broadcast-Nachricht. Dabei zeigt der obere Teil der Abbildung eine Übersicht der Struktur des Datenpaketes und der untere Teil eine genauere Darstellung des auch als Body bezeichneten Datencontainers des Datenpaketes.

In dem in Figur 3 dargestellten Ausführungsbeispiel ist das Datenpaket nach Vorgaben des Ethernet-Standards aufgebaut. Dabei wird der im Ethernet-Protokoll vorhandene Parameter "Type" im Datencontainer vorteilhafterweise durch einen von zwei neuen Protokolltypen belegt, welche das jeweilige Ethernet Broadcast-Datenpaket spezifizieren. Dabei gibt der eine der beiden neuen Protokolltypen an, dass in dem Datencontainer IP-Adressen enthalten sind, während der andere neue Protokolltyp spezifiziert, dass in dem Datencontainer MAC-Adressen enthalten sind. Wie zuvor bereits ausgeführt, können etwa 250 Empfängeradressen mittels eines Ethernet-Datenpaketes übertragen werden. Dabei sind die vorbestimmte Empfänger kennzeichnenden Adressen in Figur 3 als "Member 1" . . . "Member N" angedeutet.

Der in dem Datencontainer dargestellte Parameter "Life Time" enthält eine Angabe zur Gültigkeitsdauer der mittels der Broadcast-Nachricht übertragenen Identität, welche in der Abbildung als "Multicast-ID" angegeben ist. Vorteilhafterweise wird im Ethernet-Protokoll eine neue Nachricht eingeführt, mittels derer die Verlängerung der Gültigkeitsdauer einer Identität erfolgen kann.

Zur Übertragung der Multicast-Nachricht selbst kann nach Übertragung der Broadcast-Nachricht in Form des in Figur 3 dargestellten Datenpaketes eine im Ethernet-Protokoll als solch bekannte Multicast-Nachricht verwendet werden.

Entsprechend den vorherigen Ausführungen ermöglicht es die Erfindung vorteilhafterweise, auch Signalisierungsnachrichten mittels Multicast-Nachrichten zu versenden. Des Weiteren wird die automatische Einrichtung verschiedener Multicast-Gruppen, d. h. die Zuweisung einer Identität zu einer Multicast-Nachricht beziehungsweise zu mehreren Empfängern, ermöglicht, ohne dass von Seiten der Empfänger eine explizite Registrierung erforderlich ist. Dies bietet den Vorteil, dass Nachrichten auch kurzfristig mittels einer Multicast-Nachricht an mehrere vorbestimmte Empfänger übertragen werden können. Dabei werden anstelle des Sendens separater Kopien derselben elektronischen Nachricht an verschiedene Empfänger lediglich eine Broadcast- und eine Multicast-Nachricht über das gemeinsame Übertragungsmedium gesendet. Dabei wird die Broadcast-Nachricht lediglich einmalig zum Aufsetzen der neuen Multicast-Gruppe auf der Sicherungsschicht benötigt.
Die Erfindung kann vorteilhafterweise in Verbindung mit beliebigen Protokollen und Verfahren auf der Sicherungsschicht verwendet werden.

## Patentansprüche

1. Verfahren zur Übertragung einer Identität einer Multicast-Nachricht von einem Sender an mehrere über ein gemeinsames Übertragungsmedium mit dem Sender verbundene Empfänger mit den folgenden Schritten:
- Zuweisen der Identität zu der Multicast-Nachricht,
- Erzeugen einer Broadcast-Nachricht, welche die Identität sowie vorbestimmte Empfänger der Multicast-Nachricht kennzeichnende Adressen enthält,
- Senden der Broadcast-Nachricht von dem Sender an alle über das gemeinsame Übertragungsmedium mit dem Sender verbundene Empfänger,
- Überprüfen der Broadcast-Nachricht durch die Empfänger und
- Speichern der Identität durch die mittels der kennzeichnenden Adressen vorbestimmten Empfänger.

2. Verfahren nach Anspruch 1,
bei dem zur Übertragung einer Multicast-Nachricht von einem Sender an mehrere über ein gemeinsames Übertragungsmedium mit dem Sender verbundene Empfänger folgende weitere Schritte ausgeführt werden:
- Senden der Multicast-Nachricht über das gemeinsame Übertragungsmedium durch den Sender, wobei die Multicast-Nachricht die Identität enthält, und
- Empfangen der Multicast-Nachricht durch die vorbestimmten Empfänger anhand der Identität.

3. Verfahren nach Anspruch 2, **gekennzeichnet durch**
- Senden mindestens einer weiteren die Identität enthaltenden Multicast-Nachricht über das gemeinsame Übertragungsmedium, und
- Empfangen der mindestens einen weiteren Multicast-Nachricht durch die vorbestimmten Empfänger basierend auf der Identität.

4. Verfahren nach Anspruch 1 oder einem der Ansprüche 2 oder 3,
**dadurch gekennzeichnet, dass**
als gemeinsames Übertragungsmedium ein Medium der Sicherungsschicht (Data Link Layer) verwendet wird.

5. Verfahren nach Anspruch 1 oder einem der Ansprüche 2 bis 4,
**dadurch gekennzeichnet, dass** als gemeinsames Übertragungsmedium ein Funkübertragungskanal verwendet wird.

6. Verfahren nach Anspruch 1 oder einem der Ansprüche 2 bis 4,
**dadurch gekennzeichnet, dass** als gemeinsames Übertragungsmedium ein Datenbus verwendet
wird.

7. Verfahren nach Anspruch 1 oder einem der Ansprüche 2 bis 6,
**dadurch gekennzeichnet, dass**
als Multicast-Nachricht eine Signalisierungsnachricht verwendet wird.

8. Verfahren nach Anspruch 1 oder einem der Ansprüche 2 bis 7,
**dadurch gekennzeichnet, dass**
als kennzeichnende Adressen IP (Internetprotokoll)- oder MAC (Media Access Control)-Adressen verwendet werden.

9. Verfahren nach Anspruch 8,
**dadurch gekennzeichnet, dass**
in der Broadcast-Nachricht **gekennzeichnet** wird, ob als kennzeichnende Adressen IP- oder MAC-Adressen enthalten sind.

10. Verfahren nach Anspruch 1 oder einem der Ansprüche 2 bis 9,
**dadurch gekennzeichnet, dass**
als Broadcast-Nachricht ein Datenpaket mit einem Header und einem Datencontainer (Body) verwendet wird.

11. Verfahren nach Anspruch 10,
**dadurch gekennzeichnet, dass**
die kennzeichnenden Adressen der vorbestimmten Empfänger in dem Datencontainer übertragen werden.

12. Verfahren nach Anspruch 1 oder einem der Ansprüche 2 bis 11,
**dadurch gekennzeichnet, dass**
in der Broadcast-Nachricht eine Gültigkeitsdauer der Identität angegeben wird.

13. Verfahren nach Anspruch 1 oder einem der Ansprüche 2 bis 12,
**dadurch gekennzeichnet, dass** die Broadcast- und die Multicast-Nachricht unter Verwendung des Ethernet (IEEE802.3)-Standards oder des Wireless Local Area Network (WLAN, IEEE802.11)-Standards gesendet werden.

14. Vorrichtung zum Senden einer Multicast-Nachricht an mehrere über ein gemeinsames Übertragungsmedium an die Vorrichtung angebundene Empfänger mit
- einer Verwaltungseinrichtung (3) zum Zuweisen einer Identität zu der Multicast-Nachricht,
- einer Paketdatenerzeugungseinrichtung (7) zum Erzeugen der Multicast-Nachricht, welche die Identität enthält, **gekennzeichnet durch**
- eine Broadcast-Paketerzeugungseinrichtung (5) zum Erzeugen einer Broadcast-Nachricht, welche die Identität und mehrere, vorbestimmte Empfänger der Multicast-Nachricht kennzeichnende Adressen enthält, sowie
- eine Paketübertragungseinrichtung (6) zum Übertragen der Broadcast-Nachricht an alle über das gemeinsame Übertragungsmedium angebundene Empfänger und zum dazu zeitlich versetzten Übertragen der Multicast-Nachricht an die mittels der kennzeichnenden Adressen vorbestimmten Empfänger.

15. Vorrichtung zum Empfangen einer Multicast-Nachricht, wobei die Multicast-Nachricht für mehrere über ein gemeinsames Übertragungsmedium an einen Sender angebundene Empfänger bestimmt ist, mit
- einer Empfangseinrichtung (11) zum Empfangen einer Broadcast-Nachricht und der Multicast-Nachricht,
- einer Broadcast-Verarbeitungseinrichtung (12) zum Analysieren, ob die empfangene Broadcast-Nachricht eine die Vorrichtung kennzeichnende Adresse enthält und gegebenenfalls zum Auslesen einer Identität aus der betreffenden Broadcast-Nachricht sowie
- einer Multicast-Verarbeitungseinrichtung (13) zum Speichern der von der Broadcast-Verarbeitungseinrichtung (12) übermittelten Identität und zum Filtern und Empfangen von die Identität enthaltenden Multicast-Nachrichten.

## Claims

1. Method for transmission of an identity of a multicast message from a transmitter to a plurality of recipients, which are connected to the transmitter via a common transmission medium, having the following steps:
- assignment of the identity to the multicast message,
- production of a broadcast message which contains the identity as well as the addresses which identify predetermined recipients of the multicast message,
- transmission of the broadcast message from the transmitter to all the recipients connected to the transmitter via the common transmission medium,
- checking of the broadcast message by the recipients, and
- storage of the identity by the recipients predetermined by means of the identifying addresses.

2. A method in which, for transmission of a multicast message from a transmitter to a plurality of recipients connected to the transmitter via a common transmission medium, the following further steps are carried out:
- transmission of the multicast message via the common transmission medium by the transmitter, with the multicast message containing the identity, and
- reception of the multicast message by the predetermined recipients on the basis of the identity.

3. Method according to Claim 2,
**characterized by**
- transmission of at least one further multicast message, which contains the identity, via the common transmission medium, and
- reception of the at least one further multicast message by the predetermined recipients on the basis of the identity.

4. Method according to Claim 1 or one of Claims 2 and 3,
**characterized in that**
a medium in the data link layer is used as the common transmission medium.

5. Method according to Claim 1 or one of Claims 2 to 4,
**characterized in that**
a radio transmission channel is used as the common transmission medium.

6. Method according to Claim 1 or one of Claims 2 to 4,
**characterized in that**
a data bus is used as the common transmission medium.

7. Method according to Claim 1 or one of Claims 2 to 6,
**characterized in that**
a signaling message is used as the multicast message.

8. Method according to Claim 1 or one of Claims 2 to 7,
**characterized in that**
IP (Internet Protocol) or MAC (Media Access Control) addresses are used as identifying addresses.

9. Method according to Claim 8,
**characterized in that**
the broadcast message is used to identify whether IP or MAC addresses are contained as identifying addresses.

10. Method according to Claim 1 or one of Claims 2 to 9,
**characterized in that**
a data packet with a header and a data container (body) is used as the broadcast message.

11. Method according to Claim 10,
**characterized in that**
the identifying addresses of the predetermined recipients are transmitted in the data container.

12. Method according to Claim 1 or one of Claims 2 to 11,
**characterized in that**
a validity duration of the identity is indicated in the broadcast message.

13. Method according to Claim 1 or one of Claims 2 to 12,
**characterized in that**
the broadcast and the multicast message are transmitted using the Ethernet (IEEE802.3) Standard or the Wireless Local Area Network (WLAN, IEEE802.11) Standard.

14. Apparatus for transmission of a multicast message to a plurality of recipients linked to the apparatus via a common transmission medium, having
- a management device (3) for assignment of an identity to the multicast message,
- a packet data production device (7) for production of the multicast message which contains the identity,
**characterized by**
- a broadcast packet production device (5) for production of a broadcast message which contains the identity and a plurality of addresses which identify predetermined recipients of the multicast message, as well as
- a packet transmission device (6) for transmission of the broadcast message to all the recipients linked via the common transmission medium, and for transmission, at a time offset with respect to this, of the multicast message to the recipients predetermined by means of the identifying addresses.

15. Apparatus for reception of a multicast message, with the multicast message being intended for a plurality of recipients linked to a transmitter via a common transmission medium, having
- a receiving device (11) for reception of a broadcast message and of the multicast message,
- a broadcast processing device (12) for analysis of whether the received broadcast message contains an address which identifies the apparatus and, if appropriate, for reading an identity from the relevant broadcast message, as well as
- a multicast processing device (13) for storage of the identity which is transmitted by the broadcast processing device (12), and for filtering and reception of multicast messages which contain the identity.

## Revendications

1. Procédé de transmission d'une identité d'un message de diffusion sélective d'un émetteur à plusieurs récepteurs reliés à l'émetteur via un média de transmission commun, comportant les étapes suivantes :
- affectation de l'identité au message de diffusion sélective ;
- génération d'un message de diffusion générale qui contient l'identité ainsi que des adresses identifiant des récepteurs prédéterminés du message de diffusion sélective ;
- envoi du message de diffusion générale de l'émetteur à tous les récepteurs reliés à l'émetteur via le média de transmission commun ;
- vérification du message de diffusion générale par les récepteurs et
- stockage de l'identité par les récepteurs prédéterminés au moyen des adresses qui les identifient.

2. Procédé selon la revendication 1, dans lequel les étapes suivantes sont exécutées aux fins de la transmission d'un message de diffusion sélective d'un émetteur à plusieurs récepteurs reliés à l'émetteur via un média de transmission commun :
- émission du message de diffusion sélective par l'émetteur via le média de transmission commun, le message de diffusion sélective contenant l'identité et
- réception, à l'aide de l'identité, du message de diffusion sélective par les récepteurs prédéterminés.

3. Procédé selon la revendication 2, **caractérisé par**
- l'émission d'au moins un autre message de diffusion sélective contenant l'identité via le média de transmission commun et
- la réception, sur la base de l'identité, de l'au moins un autre message de diffusion sélective par les récepteurs prédéterminés.

4. Procédé selon la revendication 1 ou l'une des revendications 2 ou 3, **caractérisé en ce qu'**est utilisé, en tant que média de transmission commun, un média de la couche de sécurité (Data Link Layer).

5. Procédé selon la revendication 1 ou l'une des revendications 2 à 4, **caractérisé en ce qu'**est utilisé, en tant que média de transmission commun, un canal de transmission radio.

6. Procédé selon la revendication 1 ou l'une des revendications 2 à 4, **caractérisé en ce qu'**est utilisé, en tant que média de transmission commun, un bus de données.

7. Procédé selon la revendication 1 ou l'une des revendications 2 à 6, **caractérisé en ce qu'**est utilisé, en tant que message de diffusion sélective, un message de signalisation.

8. Procédé selon la revendication 1 ou l'une des revendications 2 à 7, **caractérisé en ce que** sont utilisées, en tant qu'adresses d'identification, des adresses IP (Internet Protocol) ou MAC (Media Access Control).

9. Procédé selon la revendication 8, **caractérisé en ce qu'**il est indiqué, dans le message de diffusion générale, si les adresses contenues en tant qu'adresses d'identification sont des adresses IP ou MAC.

10. Procédé selon la revendication 1 ou l'une des revendications 2 à 9, **caractérisé en ce qu'**est utilisé, en tant que message de diffusion générale, un paquet de données avec un en-tête et un conteneur de données (Body).

11. Procédé selon la revendication 10, **caractérisé en ce que** les adresses d'identification des récepteurs prédéterminés sont transmises dans le conteneur de données.

12. Procédé selon la revendication 1 ou l'une des revendications 2 à 11, **caractérisé en ce qu'**une durée de validité de l'identité est indiquée dans le message de diffusion générale.

13. Procédé selon la revendication 1 ou l'une des revendications 2 à 12, **caractérisé en ce que** le message de diffusion générale et le message de diffusion sélective sont émis moyennant l'utilisation de la norme Ethernet (IEEE 802.3) ou de la norme Wireless Local Area Network (WLAN, IEEE 802.11).

14. Dispositif pour envoyer un message de diffusion sélective à plusieurs récepteurs reliés au dispositif via un média de transmission commun, comportant
- un dispositif de gestion (3) pour affecter une identité au message de diffusion sélective,
- un dispositif de génération de données en paquets (7) pour générer le message de diffusion sélective qui contient l'identité,
**caractérisé par**
- un dispositif de génération de paquets de diffusion générale (5) pour générer un message de diffusion générale qui contient l'identité et plusieurs adresses identifiant des récepteurs prédéterminés du message de diffusion sélective ainsi que
- un dispositif de transmission de paquets (6) pour transmettre le message de diffusion générale à tous les récepteurs reliés au média de transmission commun et pour transmettre avec un décalage temporel par rapport à cette transmission le message de diffusion sélective aux récepteurs prédéterminés au moyen des adresses d'identification.

15. Dispositif de réception d'un message de diffusion sélective, le message de diffusion sélective étant destiné à plusieurs récepteurs reliés à un émetteur via un média de transmission commun, comportant
- un dispositif récepteur (11) pour recevoir un message de diffusion générale et le message de diffusion sélective,
- un dispositif de traitement de la diffusion générale (12) pour analyser si le message de diffusion générale reçu contient une adresse d'identification du dispositif de réception et, le cas échéant, pour lire une identité à partir du message de diffusion générale concerné ainsi que
- un dispositif de traitement de la diffusion sélective (13) pour stocker l'identité transmise par le dispositif de traitement de la diffusion générale (12) et pour filtrer et recevoir des messages de diffusion sélective contenant l'identité.
